(19) Europäisches Patentamt

European Patent Office

Office européen des brevets

(11) **EP 1 083 756 A2**

(12) **EUROPEAN PATENT APPLICATION**

(43) Date of publication:
**14.03.2001 Bulletin 2001/11**

(51) Int. Cl.7: **H04N 13/02**, **H04N 13/00**

(21) Application number: **00119129.5**

(22) Date of filing: **04.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.09.1999 JP 25566999**

(71) Applicant:
**Mixed Reality Systems Laboratory Inc.
Yokohama-shi, Kanagawa-ken (JP)**

(72) Inventors:
 • **Morishima, Hideki,
   Mixed Reality Systems
   Yokohama-shi, Kanagawa-ken (JP)**
 • **Nishihara, Hiroshi,
   Mixed Reality Systems
   Yokohama-shi, Kanagawa-ken (JP)**

 • **Inoguchi, Kazutaka,
   Mixed Reality Systems
   Yokohama-shi, Kanagawa-ken (JP)**
 • **Taniguchi, Naosato,
   Mixed Reality Systems
   Yokohama-shi, Kanagawa-ken (JP)**
 • **Takikawa, Tomoshi,
   Mixed Reality Systems
   Yokohama-shi, Kanagawa-ken (JP)**

(74) Representative:
**Pellmann, Hans-Bernd, Dipl.-Ing. et al
Patentanwaltsbüro
Tiedtke-Bühling-Kinne
Bavariaring 4
80336 München (DE)**

(54) **Stereoscopic image display apparatus**

(57)    Stereoscopic observation of image information displayed on a display is implemented by forming a mask pattern in which a plurality of opening portions consisting of an array of horizontal repetitions of transmitting portions and non-transmitting portions and a plurality of shield portions consisting of only non-transmitting portions are arranged at predetermined pitches in a horizontal direction and in a vertical direction, in a display surface of an optical modulator having a discrete pixel structure, radiating light from a light source to the optical modulator to form patterned light, guiding the patterned light through an optical system having lenticular lenses to illuminate a display displaying at least two parallax images, and guiding beams based on the at least two parallax images displayed on the display, to the right eye and to the left eye of an observer.

FIG. 1

**Description**

BACKGROUND OF THE INVENTION

Field of the Invention

The present invention relates to a stereoscopic image display apparatus that permits an observer to observe a stereoscopic image without the need for special glasses and, more particularly, to the stereoscopic image display apparatus that is suitably applicable to stereoscopic display in television, video, and computer monitors, game machines, etc. and that is constructed in such structure that a predetermined emission pattern is formed by a self-emission type display element such as a CRT or the like, or light from an illumination light source is guided through a mask pattern having predetermined opening and shield portions to form patterned light, that the thus patterned light is provided with directivity by an optical system having microscopic structure so patterned as to separate the patterned light into beams incident to the right eye and to the left eye of the observer, that a transmissive display device is disposed between the patterned optical system and the observer, and that the display device displays a synthetic image of alternate stripes of parallax images corresponding to the right eye and to the left eye, thereby permitting observation of a stereoscopic image.

Related Background Art

With regard to the conventional stereoscopic image display methods and apparatus constructed in such structure that the predetermined emission pattern is formed by the self-emission type display element such as the CRT or the like, or the light from the illumination light source is guided through the mask pattern having the predetermined opening and shield portions to form the patterned light, that the patterned light is provided with directivity by the optical system having the microscopic structure so patterned as to separate the patterned light into beams incident to the right eye and to the left eye of the observer, that the transmissive display device is disposed between the patterned optical system and the observer, and that the display device displays the synthetic image of alternate stripes of parallax images corresponding to the right eye and to the left eye, there were proposals of the stereoscopic image display apparatus characterized in that the optical action of the optical system in the horizontal direction is different from that in the vertical direction, for example, as described in Japanese Patent Application Laid-Open No. 9-311294. Fig. 10 is a perspective view for explaining the fundamental structure of the stereoscopic image display apparatus disclosed in the above application.

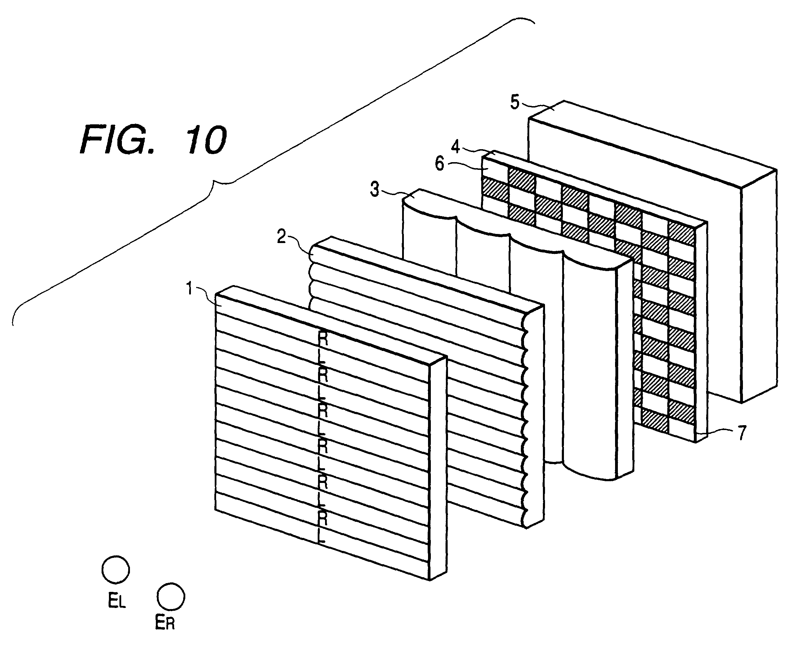

In Fig. 10, reference numeral 1 represents a schematic view of a liquid-crystal display (LCD) for display of image. Numeral 5 designates a backlight as an illumination light source. Placed in front of the backlight 5 is a mask substrate 4 provided with a mask pattern 7 having light-transmitting openings 6 of a checkered pattern. Two lenticular lenses 2, 3 (vertical lenticular lens 3 and horizontal lenticular lens 2), which are made of transparent resin or glass and which are perpendicular to each other, are placed as microlenses between the mask substrate 4 and the LCD 1. The LCD 1 displays an array of alternate horizontal stripes of left and right parallax images L, R arranged in the vertical (up-to-down) direction as illustrated. Light from the backlight 5 travels through each of the openings 6 of the mask substrate 4 and then through the vertical lenticular lens 3 and the horizontal lenticular lens 2 to illuminate the LCD 1, whereby the right and left parallax images are separately observed by the observer's eyes ER, EL.

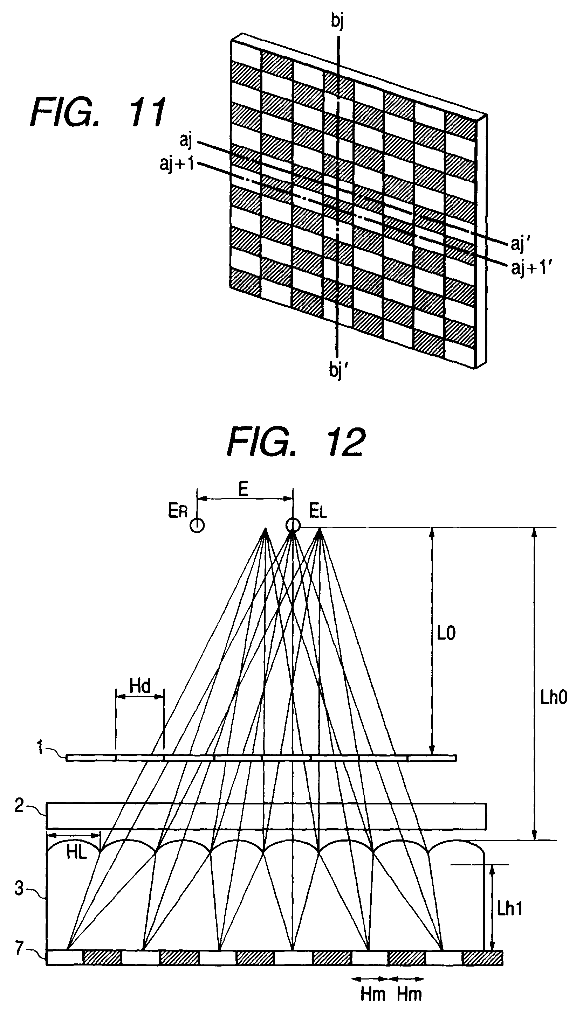

Fig. 11 is a front view of the mask pattern 7 illustrated in Fig. 10.

In the stereoscopic image display apparatus illustrated in Fig. 10, where an LCD is used as the mask substrate 4 to allow variation in the opening shape of the mask pattern 7, there arises a problem that no light reaches specific positions on the observation plane from the display screen because of influence of the black matrix between pixels of the LCD and thus the entire screen looks dark.

If the apparatus is constructed to make the openings of the mask pattern 7 variable, have a detector for detecting the position of the observer's eyes, and make the openings of the mask pattern track observer's movement, stereoscopic vision will not be interrupted even with some movement of the observer. In the case of such structure being employed, however, there occurred the problem that dark screen areas appeared on the observation plane because of the influence of the black matrix of the LCD constituting the above mask substrate 4.

SUMMARY OF THE INVENTION

An object of the present invention is to provide a stereoscopic image display apparatus that permits the observer to observe a good image of the LCD for display even with some movement of the observer.

Another object of the present invention is to provide a stereoscopic image display apparatus that facilitates observation of a good stereoscopic image by improving or eliminating the portions with no image light arriving on the observation plane due to the black matrix of a black and white LCD in such a way that a checkered mask pattern formed in a self-emitting element or a mask substrate is formed by the black and white LCD, that the mask pattern shape on the black and white LCD is varied in accordance with the observer's motion detected by a detecting means for detecting the position of the observer's head or eyes, or the like, so as to perform tracking of the observation area, and that a shift is given to the arrangement pitch of cylindrical lenses of a vertical lenticular lens.

A stereoscopic image display apparatus according to an aspect of the present invention is a stereoscopic image display apparatus constructed to form a mask pattern in which a plurality of opening portions, each consisting of an array of horizontal repetitions of transmitting portions and non-transmitting portions, and a plurality of shield portions, each consisting of only non-transmitting portions, are arranged at predetermined pitches in a horizontal direction and in a vertical direction, in a display surface of an optical modulator having a discrete pixel structure, to radiate light from light source means to the optical modulator to form patterned light, to guide the patterned light through an optical system to illuminate a display displaying at least two parallax images, and to guide beams based on the at least two parallax images displayed on the display to the right eye and to the left eye of an observer, so as to permit stereoscopic observation of image information displayed on the display, wherein said optical system comprises a vertical lenticular lens consisting of a plurality of cylindrical lenses having a generator along the vertical direction and a lateral lenticular lens consisting of a plurality of cylindrical lenses having a generator along the horizontal direction and wherein said vertical lenticular lens is a lens array in which cylindrical units, each comprising a plurality of cylindrical lenses of different pitches, are arranged at constant pitches.

A stereoscopic image display apparatus according to another aspect of the present invention is a stereoscopic image display apparatus constructed to form a mask pattern in which a plurality of opening portions, each consisting of an array of horizontal repetitions of transmitting portions and non-transmitting portions, and a plurality of shield portions, each consisting of only non-transmitting portions, are arranged at predetermined pitches in a horizontal direction and in a vertical direction, in a display surface of an optical modulator having a discrete pixel structure, to radiate light from light source means to the optical modulator to form patterned light, to focus the patterned light on a predetermined plane by an imaging optical system to form an image thereof, to guide patterned light from the image formed on the predetermined plane, through an optical system to illuminate a display displaying at least two parallax images, and to guide beams based on the at least two parallax images displayed on the display to the right eye and to the left eye of an observer, so as to permit stereoscopic observation of image information displayed on the display, wherein said imaging optical system comprises a vertical lenticular lens consisting of a plurality of cylindrical lenses having a generator along the vertical direction and a lateral lenticular lens consisting of a plurality of cylindrical lenses having a generator along the horizontal direction and wherein said vertical lenticular lens is a lens array in which cylindrical units, each comprising a plurality of cylindrical lenses of different pitches, are arranged at constant pitches.

A stereoscopic image display apparatus according to another aspect of the present invention is a stereoscopic image display apparatus comprising illumination beam forming means for forming patterned illumination beams, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams with directivity and to converge beams illuminating each horizontal line into a predetermined area on an observation plane corresponding to a parallax image displayed on each horizontal line on the image display device, wherein said illumination beam forming means forms the patterned illumination beams by forming a predetermined emission pattern consisting of light-emitting portions and non-emitting portions on a self-emitting element comprising a lot of pixels and having ineffective portions between the pixels and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

A stereoscopic image display apparatus according to another aspect of the present invention is a stereoscopic image display apparatus comprising illumination beam forming means for forming patterned illumination beams, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams with directivity and to converge beams illuminating each horizontal line into a predetermined area on an observation plane corresponding to a parallax image displayed on each horizontal line on the image display device, wherein said illumination beam forming means comprises a backlight light source and a transmissive display placed in front thereof, having a lot of pixels, and having ineffective portions between the pixels and forms the patterned illumination beams by forming a predetermined mask pattern consisting of transmitting and non-transmitting portions on the display and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

A stereoscopic image display apparatus according to another aspect of the present invention is a stereoscopic image display apparatus comprising illumination beam forming means for forming patterned illumination beams, an imaging optical system for imaging the illumination beams patterned by said illumination beam forming means, on a predetermined plane, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams, imaged on the predetermined plane, with directivity and to converge beams illuminating each horizontal line into a predetermined area on an observation plane corresponding to a parallax image displayed on each horizontal line on the image display device, wherein said illumination beam forming means forms the patterned illumination beams by forming a predetermined emission pattern consisting of light-emitting portions and non-emitting portions on a self-emitting element comprising a lot of pixels and having ineffective portions between the pixels and wherein said imaging optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

A stereoscopic image display apparatus according to another aspect of the present invention is a stereoscopic image display apparatus comprising illumination beam forming means for forming patterned illumination beams, an imaging optical system for imaging the illumination beams patterned by said illumination beam forming means, on a predetermined plane, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams, imaged on the predetermined plane, with directivity and to converge beams illuminating each horizontal line into a predetermined area on an observation plane corresponding to a parallax image displayed on each horizontal line on the image display device, wherein said illumination beam forming means comprises a backlight light source and a transmissive display placed in front thereof, having a lot of pixels, and having ineffective portions between the pixels and forms the patterned illumination beams by forming a predetermined mask pattern consisting of transmitting and non-transmitting portions on the display and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

In the above-stated stereoscopic image display apparatus according to an aspect of the present invention, said predetermined emission pattern consisting of the light-emitting portions and non-emitting portions formed on said self-emitting element is a checkered pattern consisting of rectangular light-emitting portions and non-emitting portions each comprised of plurality of pixels arranged in the horizontal direction and the vertical direction, wherein, letting M be an integer closest to a ratio Hw/Hb where Hw represents a horizontal length of each pixel in the self-emitting element and Hb represents a horizontal length of non-effective portion of each pixel in the self-emitting element, the number N of components constituting said predetermined pattern is equal to the integer M ($N=M$), wherein the i-th ($i = 1,..., N$) component is placed at a position shifted by $t_i$ from a position HL $\cdot$ i defined by the basic period HL, where $t_i$ ($i = 1,..., N$) is a value resulting from rearrangement of values of Hb $\cdot$ k ($k = -(M - 1)/2, -(M - 1)/2 + 1,..., (M - 1)/2$) in a predetermined order when M is an odd number, but $t_i$ is a value resulting from rearrangement of values of Hb $\cdot$ k ($k = -M/2, -M/2 + 1,..., M/2 - 1$) in a predetermined order when M is an even number, and the entire shape of the horizontal structure of said deflecting optical system is such a shape that said pattern consisting of N components is repeated a predetermined number of times.

In the above-stated stereoscopic image display apparatus according to an aspect of the present invention, said predetermined mask pattern consisting of the transmitting and non-transmitting portions formed on said transmissive optical modulator is a checkered pattern comprising rectangular transmitting portions and non-transmitting portions each comprised of plurality of pixels arranged in the horizontal direction and the vertical direction, wherein, letting M be an integer closest to a ratio Hw/Hb where Hw represents a horizontal length of each pixel in the transmissive optical modulator and Hb represents a horizontal length of non-effective portion of each pixel in the transmissive optical modulator, the number N of components constituting said predetermined patternn is equal to the integer M ($N=M$), wherein the i-th ($i = 1,..., N$) component is placed at a position shifted by $t_i$ from a position HL $\cdot$ i defined by the basic period HL, where $t_i$ ($i = 1,..., N$) is a value resulting from rearrangement of values of Hb $\cdot$ k ($k = -(M - 1)/2, - (M - 1)/2 + 1,..., (M - 1)/2$) in a predetermined order when M is an odd number, but $t_i$ is a value resulting from rearrangement of values of Hb $\cdot$ k ($k = -M/2, -M/2 + 1,..., M/2 - 1$) in a predetermined order when M is an even number, and the entire shape of the horizontal structure of said deflecting optical system is such a shape that said pattern consisting of N components is repeated a predetermined number of times.

In the above-stated stereoscopic image display apparatus according to an aspect of the present invention, said deflecting (or imaging) optical system comprises a vertical lenticular lens consisting of a horizontally arranged array of many vertical cylindrical lenses having a generator along the vertical direction and a lateral lenticular lens consisting of a vertically arranged array of many lateral cylindrical lenses having a generator along the horizontal direction, and wherein said vertical lenticular lens is constructed in such structure that with respect to a predetermined basic period HL and a predetermined integer N, each of the first to Nth vertical cylindrical lenses is placed at a horizontal position shifted by a predetermined value from a position defined by the basic period HL and that the whole shape is comprised of a predetermined repetition number of shape patterns comprised of the N vertical cylindrical lenses.

According to further aspect of the invention, there is provided a stereoscopic display apparatus which comprisese a light-emitting element or an optical modulator element having ineffective portions between pixels, a display for displaying a synthetic parallax image, and a periodic optical system disposed between the display and said element, for transmitting beams to the left and right eyes, wherein influence of said ineffective portions is reduced on an observation plane by disturbing periodicity of said periodic optical system.

According to further aspect of the invention, there is provided a stereoscopic display method in a stereoscopic display apparatus comprising a light-emitting element or an optical modulator element having ineffective portions between pixels, a display for displaying a synthetic parallax image, and a periodic optical system disposed between the display and said element, for transmitting beams to the left and right eyes, wherein influence of said ineffective portions is reduced on an observation plane by disturbing periodicity of said periodic optical system.

BRIEF DESCRIPTION OF THE DRAWINGS

Fig. 1 is a perspective view of main part of Embodiment 1 of the present invention;
Fig. 2 is an explanatory diagram to explain the vertical lenticular lens of Fig. 1;
Fig. 3 is an explanatory diagram to explain the mask pattern of Fig. 1;
Fig. 4 is an explanatory diagram to explain illuminance distribution on the observation plane of Fig. 1;
Fig. 5 is an explanatory diagram to explain illuminance distribution on the observation plane of Fig. 1;
Fig. 6 is an explanatory diagram to explain illuminance distribution on the observation plane of Fig. 1;
Fig. 7 is an explanatory diagram to explain illuminance distribution on the observation plane of Fig. 1;
Fig. 8 is an explanatory diagram to explain illuminance distribution on the observation plane of Fig. 1;
Fig. 9 is a perspective view of main part of Embodiment 2 of the present invention;
Fig. 10 is a perspective view of main part of the conventional, stereoscopic image display apparatus;
Fig. 11 is an explanatory diagram to explain the mask pattern of Fig. 10;
Fig. 12 is an explanatory diagram to explain the optical action in observation of stereoscopic imagery according to the present invention; and
Fig. 13 is an explanatory diagram to explain the optical action in observation of stereoscopic imagery according to the present invention.

DETAILED DESCRIPTION OF THE PREFERRED EMBODIMENTS

(Embodiment 1)

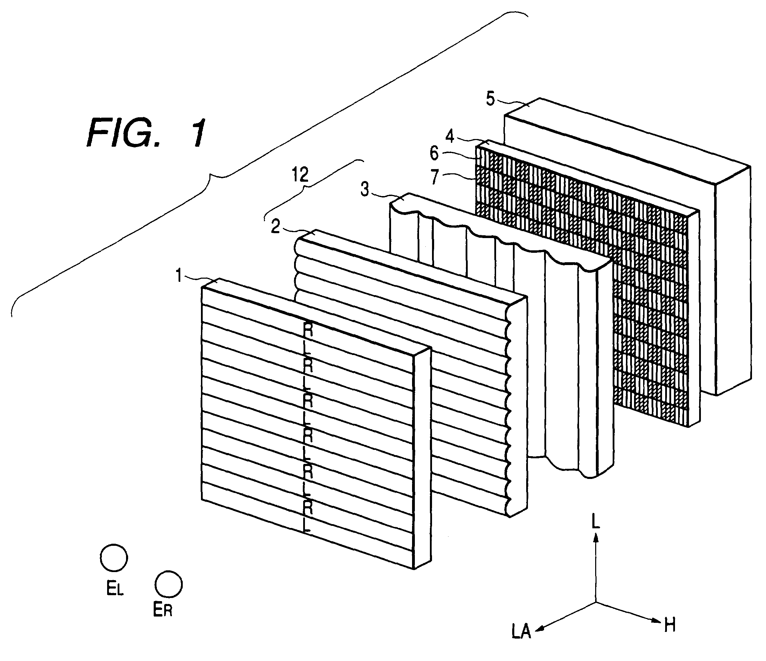

Fig. 1 is a perspective view for explaining the structure of Embodiment 1 of the stereoscopic image display apparatus according to the present invention.

Reference numeral 1 designates a liquid-crystal display (LCD) for display of image, which displays alternate, lateral stripes of parallax image L for the left eye and parallax image R for the right eye. The LCD 1 is comprised of glass substrates, a liquid crystal layer, a polarizer, and other elements, such as a color filter, electrodes, the black matrix, an antireflection film, etc. thickness of which is small enough to ignore them on a geometrical-optics basis. Numeral 5 denotes a backlight as an illumination light source. Disposed in front of the backlight 5 is a mask substrate 4 in which a mask pattern 7 having light-transmitting openings 6 is formed and which is comprised, for example, of the LCD.

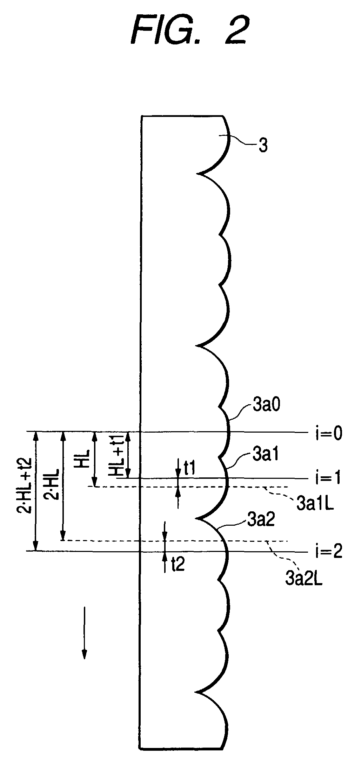

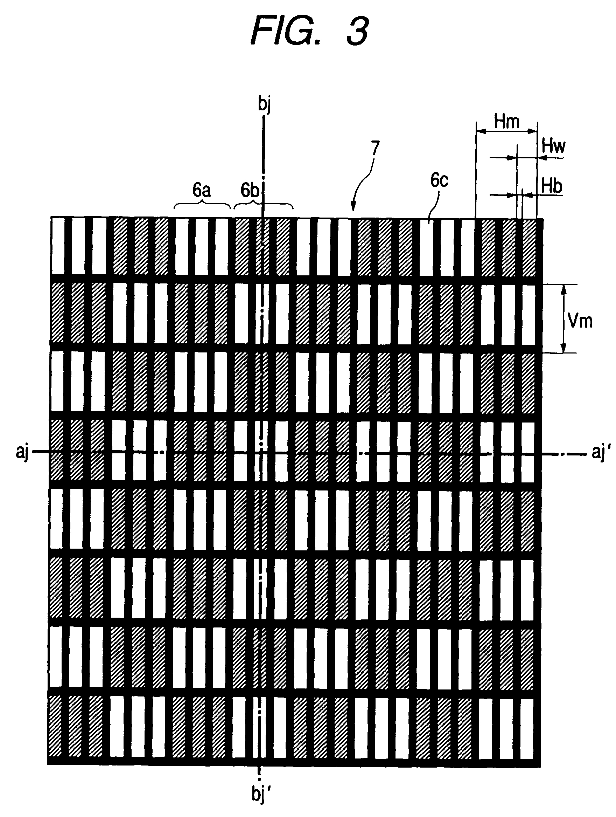

The mask pattern 7 is made of a deposited metal film of chromium or the like, or a light absorber and is fabricated by patterning on the mask substrate 4 made of glass or resin, as illustrated in Fig. 3. Each of the backlight 5 and the mask substrate 4 constitutes an element of the light source means. It can also be contemplated that the backlight 5 and the mask substrate 4 are constructed of a self-emitting element and the predetermined emission pattern is formed thereby.

Two lenticular lenses 2, 3 (vertical lenticular lens 3 and lateral lenticular lens 2), which are made of transparent resin or glass and which are perpendicular to each other, are placed as a micro optical element (optics) 12 between the mask substrate 4 and the LCD 1. The vertical lenticular lens 3 is composed of a plurality of cylindrical lenses as illustrated in Fig. 2 and some of them are provided with a shift from the basic pitch. The structure of the vertical lenticular lens 3 will be detailed hereinafter.

The light from the backlight 5 travels through each of the openings 6 of the mask substrate 4 and then through the vertical lenticular lens 3 and the lateral lenticular lens 2 to illuminate the LCD 1 and beams from the left and right parallax images L, R of the LCD 1 are guided to the observer's left and right eyes EL, ER, whereby the left and right parallax images L, R are observed separately by the two eyes.

The mask substrate 4 of the present embodiment is constructed of the black and white LCD. The mask pattern 7 formed on the LCD 4 is made to track observer's movement while the position of the observer's eyes (EL, ER) or the position of the head is detected by the detecting means (basically only in the horizontal direction), thereby preventing pseudo stereoscopy.

The tracking of observer's movement is implemented by the detector for detecting the position of the observer's head or eyes and a signal generator for generating a movement signal of the mask pattern 7 on the mask substrate 4, computed from output of the detector.

Fig. 3 is an explanatory diagram to explain the mask pattern 7 of the mask substrate (LCD) 4 of Fig. 1.

In this embodiment, the black and white LCD 4 for the mask is one resulting from extraction of the color filter from an ordinary, vertical-stripe, color LCD, as illustrated in Fig. 3. A horizontal aperture rate of dot is a little below 70%, approximately close to two thirds, and the horizontal pitch (width) Hm of the shield portions 6b and the opening portions 6a is equal to the width of three dots while the vertical pitch to the width of one dot. Therefore, where the pixel pitch (dot pitch in this case) 6c is Hw, the pitch Hm is defined as $Hm = Hw \cdot 3$ and the width Hb of the non-effective portion of each pixel is approximately equal to Hw/3. It is thus noted that the following relation holds: $M \text{ (integer)} = 3 \simeq Hw/Hb$.

In the present embodiment the cylindrical lenses forming the vertical lenticular lens 3 are arranged so that a plurality of cylindrical units comprised of a mixture of cylindrical lenses arranged at the basic pitch and cylindrical lenses arranged with a shift from the basic pitch are arranged horizontally at a fixed pitch.

This relieves the areas (dark portions) that the image light from the LCD 1 for display does not reach on the observation plane because of the influence of the black matrix of the mask substrate 4.

The way of shifting of cylindrical lenses is as follows. First, an integer M closest to a ratio Hw/Hb is obtained where Hw represents a horizontal length of each pixel in the mask substrate 4 and Hb represents a horizontal length of non-effective portion (black matrix) of each pixel in the mask substrate 4. When the number of cylindrical lenses constituting one unit (unit pattern) is N, $N=M$. The i-th ($i = 1,..., N$) cylindrical lens is placed at a position shifted by $t_i$ from a position $HL \cdot i$ defined by the basic period HL, where $t_i$ ($i = 1,..., N$) is a value resulting from rearrangement of values of $Hb \cdot k$ ($k = -(M - 1)/2, -(M - 1)/2 + 1,..., (M - 1)/2$) in a predetermined order when M is an odd number, but $t_i$ is a value resulting from rearrangement of values of $Hb \cdot k$ ($k = -M/2, -M/2 + 1,..., M/2 - 1$) in a predetermined order when M is an even number.

Specifically, when the horizontal length (width) Hb of the non-effective portion of each pixel is Hw/3, an integer M closest to the ratio Hw/Hb is 3. The value of $k_i$ is calculated as $K_1 = -(3-1)/2= -1$, $K_2 = -(3-1)/2 + 1 = 0$ and $K_3 = (3-1)/2 =1$ and the values of $Hb \cdot k$ are $k_1 \cdot Hb = -Hb$, $k_2 \cdot Hb = 0$ and $k_3 \cdot Hb = Hb$, which are then rearranged in a predetermined order to obtain the shift amounts of the cylindrical lenses as $t_1 = -Hb$ and $t_2 = Hb$. When the horizontal length (width) Hb of the non-effective portion of each pixel is Hw/4, an integer M closest to the ratio Hw/Hb is 4. The value of $k_i$ is calculated as $K_1 = -4/2= -2$, $K_2 = -4/2 + 1 = -1$, $K_3 = -4/2+2 =0$, and $K_4=4/2-1=1$, and the values of $Hb \cdot k$ are $k_1 \cdot Hb = -2Hb$, $k_2 \cdot Hb = -Hb$, $k_3 \cdot Hb = 0$, and $k_4 \cdot Hb = Hb$, which are then rearranged in a predetermined order to obtain the shift amounts of the cylindrical lenses as $t_1 = -2Hb$, $t_2 = -Hb$ and $t_3 = Hb$.

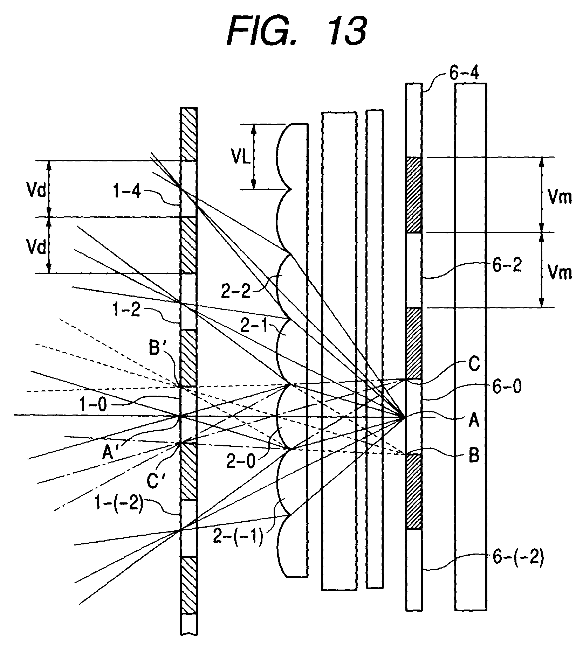

Fig. 12 and Fig. 13 are schematic diagrams of main part to show the optical action of a part in the horizontal cross section (i.e., in the H-LA cross section) and in the vertical cross section (i.e., in the L-LA cross section) in the present embodiment.

In Fig. 12 and Fig. 13, all the cylindrical lenses of the vertical lenticular lens 3 are arranged at equal pitches for convenience' sake. Further, an opening portion 6a and a shield portion 6b of the mask substrate 4 are illustrated as one opening portion and as one shield portion, respectively (each of which consists of three dots (pixels) in Fig. 1).

Fig. 12 is an explanatory diagram to show the principle of permitting the observer's eyes to observe the left and right parallax images separately in the horizontal direction, and shows a horizontal cross section of the stereoscopic image display apparatus when observed from the top.

The backlight 5 illuminates the mask pattern 7 of the mask substrate 4, whereupon light emerges from the openings 6. The vertical lenticular lens 3 is placed in front of the mask substrate 4 and the lens curvature thereof is designed so that the mask pattern 7 is located approximately at the focal point of each cylindrical lens. A pair of opening portion 6a and shield portion 6b of the mask pattern 7 corresponds approximately to one pitch of the vertical lenticular lens 3.

The pattern of the opening portions 6a and shield portions 6b illustrated in the figure corresponds to the left image out of the left and right images of the lateral stripes alternately arranged in the vertical direction, displayed on the LCD 1. The light emerging from the opening portions 6 travels through the vertical lenticular lens 3 to illuminate the left image of the LCD 1, with directivity toward the range as indicated by solid lines in the figure.

In the figure EL represents the observer's left eye and the pitch of the vertical lenticular lens 3 is designed to be slightly smaller than the pitch of a pair of an opening portion and a shield portion of the mask pattern 7 so as to converge the light from the opening portions 6 uniformly at the left eye across the entire width of the screen. This allows the left image on the lateral stripes displayed on the LCD 1 to be observed only in the range near the left eye EL. As for the right eye ER, the pattern of the opening portions and shield portions of the mask pattern 7 is reverse to that illustrated and thus corresponds to the stripes of the right image out of the left and right images of lateral stripes alternately arranged in the vertical direction, displayed on the LCD 1. The light from the opening portions 6 travels through the vertical lenticular lens 3 to illuminate the right eye, with directivity toward the range near the right eye ER. This allows the right image of lateral stripes displayed on the LCD 1 to be observed only in the range near the right eye ER. The left and right images on the LCD 1 are observed separately in the horizontal direction by the left and right eyes in this way.

The relation described above referring to Fig. 12 is expressed by the equations below, where Hm is the horizontal width of the shield portions or opening portions of the mask pattern 7, HL the horizontal pitch of the vertical lenticular lens 3, Lh1 the optical spacing between the mask pattern 7 and the vertical lenticular lens 3, Lh0 the optical spacing between the vertical lenticular lens 3 and the observation plane where the observer's left and right eyes EL, ER are to be placed, fh the focal length of the individual cylindrical lenses forming the vertical lenticular lens 3, and E the distance between the eyes.

$$E:Hm = Lh0:Lh1 \tag{1}$$

$$2 \times Hm:HL = (Lh0 + Lh1):Lh0 \tag{2}$$

$$fh = Lh1 \tag{3}$$

Next, Fig. 13 is a cross-sectional view in the vertical (up-to-down) direction of the stereoscopic image display apparatus, with which the vertical observation area will be described below.

In Fig. 13 the vertical lenticular lens 3 having no optical action in this cross section and the plane glass having no direct relation to the optical action are illustrated as flat plates. Further, the lateral lenticular lens 2 is illustrated in a conceptual form. The openings of the mask pattern 7 of the mask substrate 4 are as illustrated in Fig. 3 and vertically correspond to the left and right images of lateral stripes alternately arranged in the vertical direction, displayed on the LCD 1.

In Fig. 13, each opening portion 6 of the mask pattern 7 is provided for illuminating image lines for either one eye of the observer, the image line display for the observer's left eye will be described herein, and the shield portions of the mask pattern 7 are illustrated as dark shaded portions. The lines of the LCD 1 corresponding to the left eye are illustrated as white portions while the lines corresponding to the right eye as dark shaded portions.

The apparatus is designed to satisfy the relations below, where Vm is the vertical pitch of the opening and shield portions of the mask pattern, VL the pitch of the lenticular lens 2, fv the focal length of the individual cylindrical lenses forming the lenticular lens 2 in the in-plane directions of Fig. 13, Vd the vertical pixel pitch of the LCD 1, Lv1 the distance from the display surface of the LCD 1 to the lenticular lens 2, and Lv2 the distance from the lenticular lens 2 to the mask pattern 7.

$$Vd:Vm = Lv1:Lv2 \tag{4}$$

$$Vd:VL = (Lv1 + Lv2)/2:Lv2 \tag{5}$$

$$1/fv = 1/Lv1 + 1/Lv2 \tag{6}$$

Light from each opening of the mask pattern 7 is converged as a caustic curve normal to the plane of Fig. 13, on the corresponding pixel lines. Noting one of the openings, rays emerging from a central point A of the center opening 6-0 in Fig. 13 and entering the corresponding cylindrical lens 2-0 of the lenticular lens 2 are converged as a caustic curve on a central point A' of a corresponding pixel line 1-0 of the LCD. The rays emerging from the central point A of the center opening 6-0 and entering the cylindrical lenses of the lenticular lens 2 except for the cylindrical lens 2-0 are converged as caustic curves at the centers of the respective pixel lines displaying the left-eye image of the LCD 1.

Further, rays emerging from points B, C at the edges of the opening 6-0 and entering the corresponding cylindrical lens 2-0 of the lenticular lens 2 are converged as caustic curves on points B', C', respectively, at the edges of the pixel line 1-0.

Likewise, rays emerging from the other points of the opening 6-0 and entering the cylindrical lens 2-0 are converged as caustic curves on the pixel line 1-0 of the LCD. Further, all the rays emerging from opening 6-0 and entering the other cylindrical lenses than 2-0 are also converged on the pixel lines displaying the left-eye image of the LCD 1. All the rays emerging from the other opening portions than 6-0 out of the openings 6 are also converged similarly on the pixel lines displaying the left-eye image of the LCD 1 to illuminate the left-eye pixel lines of the LCD 1, and the rays are transmitted thereby to diverge according to convergence NA only in the vertical direction. The diverging beams form such an observation area that the left and right images can be observed uniformly and separately throughout the entire width in the vertical direction of the screen from the predetermined eye height of the observer. The image for the observer's left eye was described above, but the apparatus also has the like function for the image for the observer's right eye.

According to the horizontal and vertical optical action as described above, the left and right images of lateral stripes displayed on the LCD 1 as illustrated in Fig. 1 are guided to the respectively corresponding view points, so as to be perceived as a stereoscopic image by the observer.

Fig. 2 is a cross-sectional view of main part of the vertical lenticular lens 3 of Fig. 1 when cut along the horizontal direction. It is noted here that the shifts of pitches of the cylindrical lenses are exaggerated for illustration.

Let us assume that the basic pitch of three cylindrical lenses 3a0, 3a1, 3a2 is HL, that the cylindrical lens 3a0 is located at the basic position, and that each of the cylindrical lenses 3a1, 3a2 has the shift of t1 or t2, respectively, from their basic position 3a1L or 3a2L. When the positive direction of this shift amount Hb is taken along an arrow (directed to the right) in the drawing, the following relations hold.

$$t1 = -Hb,$$

$$t2 = Hb$$

The position of the cylindrical lens 3a1 is thus defined at HL + t1 from the basic cylindrical lens 3a0 and the position of the cylindrical lens 3a2 at $( 2 \times HL + t2 )$ from the basic cylindrical lens 3a0.

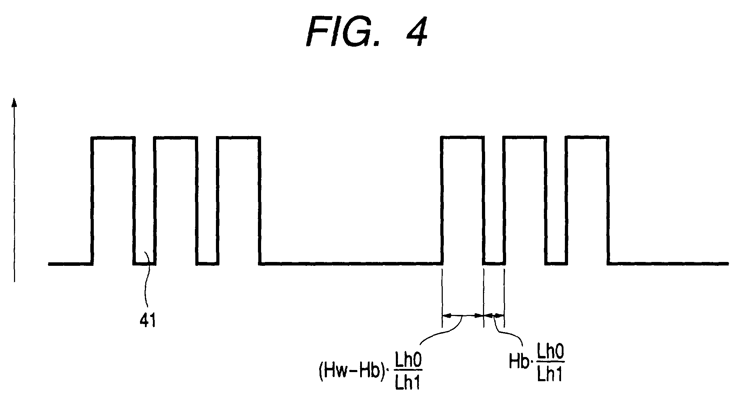

If the shift amounts t1, t2 of the cylindrical lenses 3a1, 3a2 are 0, the illuminance distribution of the right-eye image light on the observation plane will be ideally as illustrated in Fig. 4 and there will appear dark portions without Incidence of the right-eye illumination light from the screen.

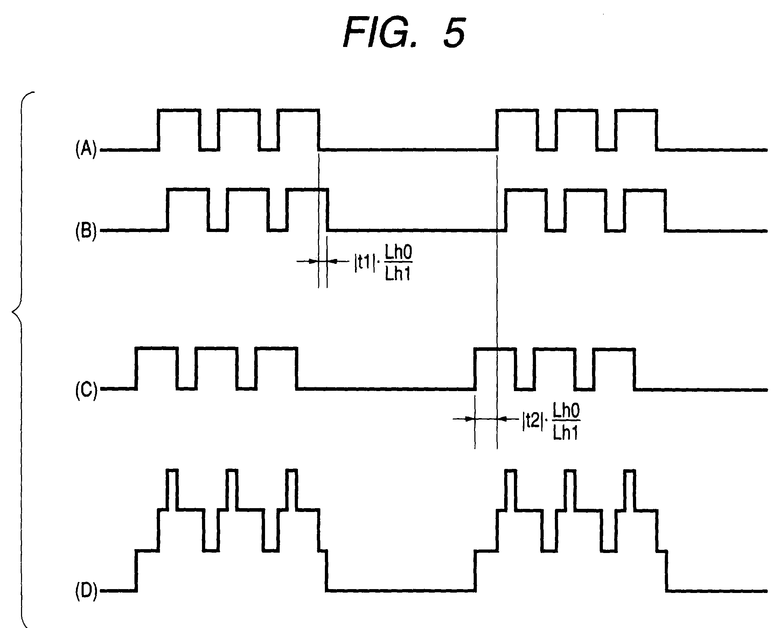

In contrast with it, when the shift amounts t1, t2 are given to the cylindrical lenses 3a1, 3a2, the illuminance distribution of the right-eye image light on the observation plane is that illustrated in (D) of Fig. 5, which is a result of addition of contribution to illuminance distribution from the cylindrical lenses 3a1 with the shift amount t1, illustrated in (B) of Fig. 5, and contribution to illuminance distribution from the cylindrical lenses 3a2 with the shift amount t2, illustrated in (C) of Fig. 5, to the illuminance distribution from the cylindrical lenses 3a0 without any shift, illustrated in (A) of Fig. 5. As a result, improvement is achieved in the dark portions on the observation plane. There appear no dark portions in (D) of Fig. 5.

(A) of Fig. 5 shows the illuminance contribution from the cylindrical lens group with no shift, (B) of Fig. 5 the illuminance contribution from the cylindrical lens group with the shift of t1, (C) of Fig. 5 the illuminance contribution from the cylindrical lens group with the shift of t2, and (D) of Fig. 5 the overall illuminance distribution resulting from addition of the contributions from the three cylindrical lens groups.

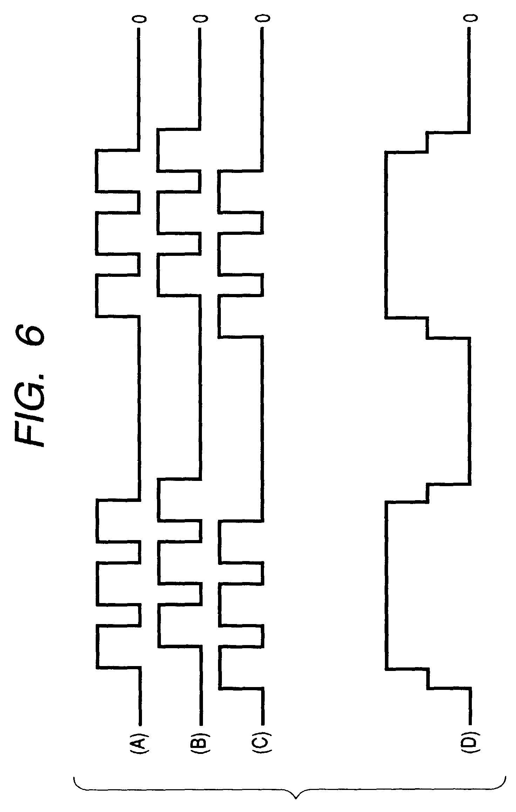

More desirably, the shift amounts t1, t2 are determined as follows; t2 = -t1 , and t1 = -(M - 1)/2 $\times$ Hb = -(3 - 1)/2 $\times$ Hb = -Hb = -Hw/3 . In this case, the illuminance distribution of the right-eye image light on the observation plane is that illustrated in (D) of Fig. 6, which is a result of addition of contribution to illuminance distribution from the cylindrical lenses with the shift of -Hb, illustrated in (B) of Fig. 6, and contribution to illuminance distribution from the cylindrical lenses with the shift of Hb, illustrated in (C) of Fig. 6, to the illuminance distribution from the cylindrical lenses with no shift, illustrated in (A) of Fig. 6. Thus the dark portions are eliminated on the observation plane. This results in uniformizing the illuminance distribution of the right-eye image light in the right-eye range on the observation plane.

When M is an integer except for 3, the dark portions are also canceled out on the observation plane by similarly shifting a plurality of cylindrical lenses forming the vertical lenticular lens.

(A) of Fig. 6 shows the illuminance contribution from the cylindrical lens group with no shift, (B) of Fig 6 the illuminance contribution from the cylindrical lens group with the shift of -Hw/3, (C) of Fig. 6 the illuminance contribution from the cylindrical lens group with the shift of Hw/3, and (D) of Fig. 6 the overall illuminance distribution resulting from addition of the contributions from the three cylindrical groups.

In the present embodiment Hw = Hm/3 , but this has no direct relation with the condition of M = 3.

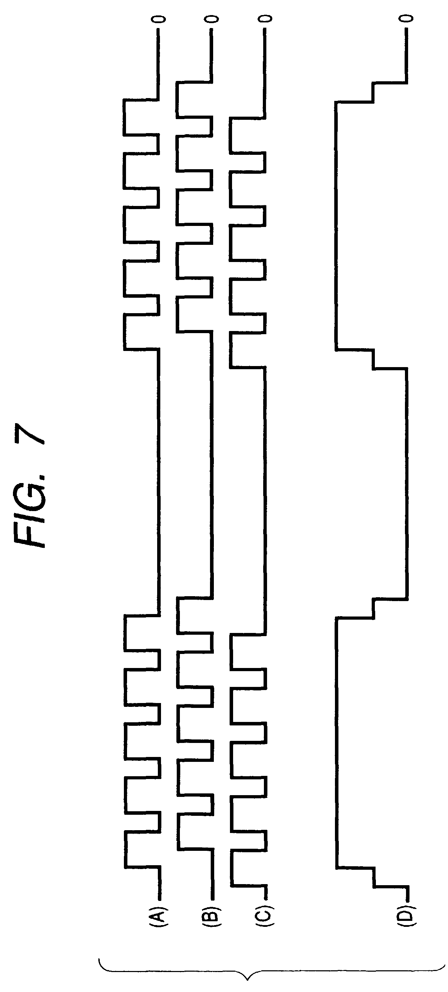

Fig. 7 shows another example of Hw = Hm/5 and confirms that the dark portions are canceled out similarly on the observation plane as in the case of M = 3 (if the aperture rate is close to 2/3).

Fig. 7 shows the illuminance distribution on the observation plane by the vertical lenticular lens composed of three patterns of cylindrical lenses with no shift and with the shifts of t1 = -Hb = -Hw/3 and t2 = Hb = Hw/3 , where the horizontal width of the opening and shield portions of the mask pattern in the black and white LCD is equal to the width of five dots.

(A) of Fig. 7 shows the illuminance contribution from the cylindrical lens group with no shift, (B) of Fig. 7 the illuminance contribution from the cylindrical lens group with the shift of -Hw/3, (C) of Fig. 7 the illuminance contribution from the cylindrical lens group with the shift of Hw/3, and (D) of Fig. 7 the overall illuminance distribution resulting from addition of the contributions from the three cylindrical lens groups.

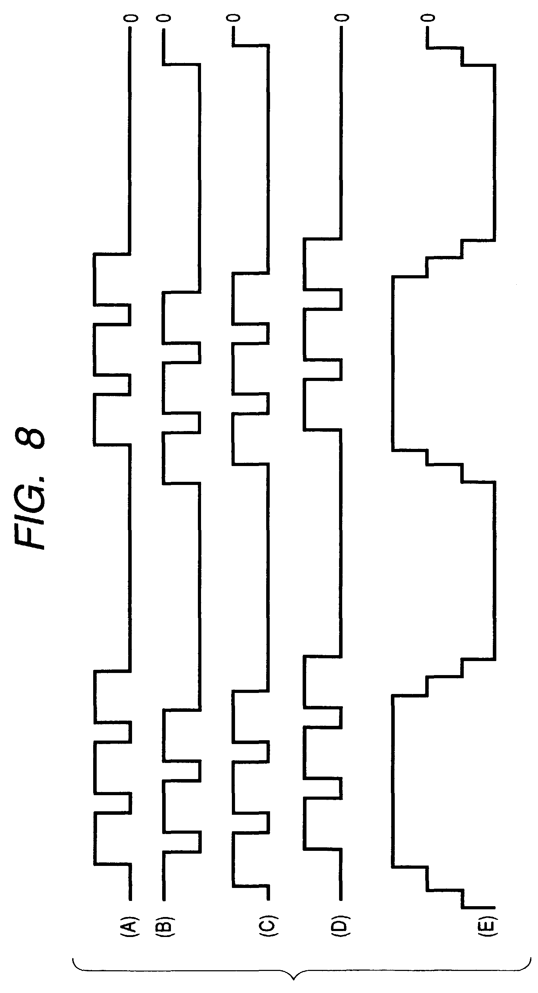

It is also possible to uniformize the illuminance distribution similarly when M is an even number. Fig. 8 shows an example in which the horizontal width of the opening and shield portions of the mask pattern in the black and white LCD is equal to the width of three dots and in which a ratio Hw/Hb of the effective part Hw to the ineffective part (black matrix part) Hb of one dot is close to 4, so as to satisfy the condition of M = 4, and shows the illuminance distribution on the observation plane by the vertical lenticular lens composed of four patterns of cylindrical lenses with no shift and with the shifts of t1 = -Hb • 2 = -(Hw/4) • 2 = -Hw/2 , t2 = -Hb = -Hw/4 , and t3 = Hb = Hw/4 . (A) of Fig. 8 shows the illuminance contribution from the cylindrical lens group with no shift, (B) of Fig. 8 the illuminance contribution from the cylindrical lens group with the shift of -Hw/2, (C) of Fig. 8 the illuminance contribution from the cylindrical lens group with the shift of -Hw/4, (D) of Fig. 8 the illuminance contribution from the cylindrical lens group with the shift of Hw/4, and (E) of Fig. 8 the overall illuminance distribution resulting from addition of the contributions from the four groups.

(Embodiment 2)

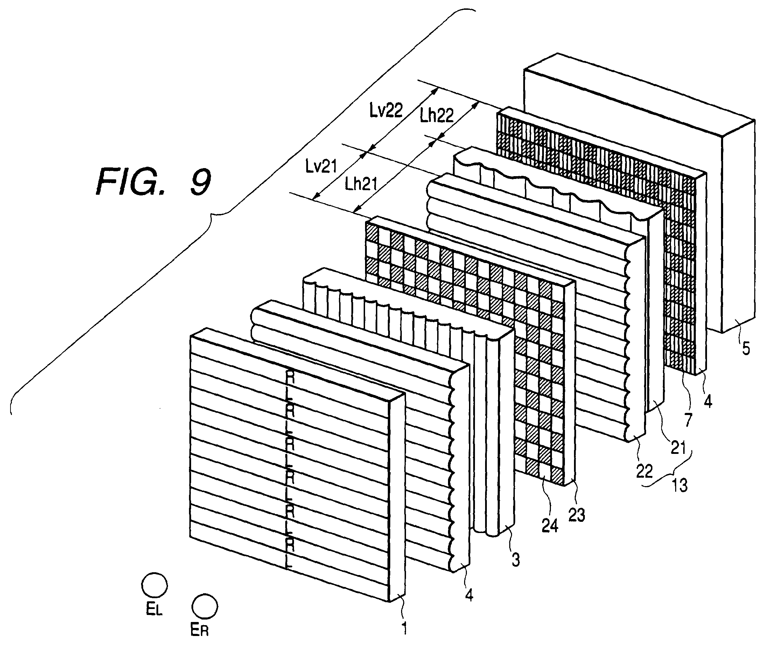

Fig. 9 is a perspective view of main part of Embodiment 2 of the stereoscopic image display apparatus according to the present invention.

The embodiment of Fig. 9 is different from Embodiment 1 in that the mask pattern 7 is imaged once on a diffuser surface by a vertical lenticular lens 21 and a horizontal lenticular lens 22, rear cross lenticular lenses are located with respect to the image of the mask pattern, the vertical lenticular lens 21 has pitch shifts, and the vertical lenticular lens and the lateral lenticular lens forming the rear cross lenticular lenses have no pitch shifts.

In Embodiment 1, the apparatus was constructed to cancel out the dark portions, appearing on the observation plane because of the influence of the black matrix of the LCD used for the mask substrate 4, by the pitch shifts of the cylindrical lenses of the vertical lenticular lens. In Embodiment 1, the beams from the thus shifted cylindrical lenses illuminate the dark portions on the observation plane, thereby canceling out the dark portions. In that case, there are possibilities that dark vertical lines appear on the observation plane and at the pitches equal to M times the pitches of the cylindrical lenses of the vertical lenticular lens on the screen if no image light reaches specific positions on the observation plane from each point on the display screen of the LCD 1 for display.

In order to prevent it, the present embodiment employs such a configuration that the mask pattern 7 on the LCD of the mask substrate 4 is imaged once by the vertical and lateral lenticular lenses 21, 22 and that the rear cross lenticular lenses are provided with respect to the image of the mask pattern 7. The vertical lenticular lens 21 out of the vertical and lateral lenticular lenses 21, 22 used for the imaging of the mask pattern 7 has the pitch shifts of the cylindrical lenses, similar to those in Embodiment 1, so that the pitches of the image of the mask pattern 7 demonstrate no dark portions due to the black matrix of the mask LCD or improvement in the dark portions in the horizontal direction. A mask pattern 24 of a diffuser for scattering rays is placed at the position of the image of the mask pattern 7. This allows us to assume that the image of the mask pattern 7 is equivalent to a normal mask pattern without dark portions in the horizontal direction. This accomplishes the effect similar to that in Embodiment 1.

The present embodiment uses the totally four lenticular lenses including the vertical and lateral lenticular lenses 21, 22 for the imaging system and the vertical and lateral lenticular lenses 3, 4 for formation of the ordinary rear cross lenticular lenses with respect to the image of the mask pattern 7.

In Fig. 9, let us assume that the LCD of the mask pattern 7 of the mask substrate 4 includes the pixels each of which has a horizontal width Hw and a vertical width vw and that the vertical and lateral lenticular lenses of the imaging system have the pitches of HL2, VL2 and the focal lengths of fh2, fv2. Then the apparatus is arranged to satisfy the relations below, where Hm2 and Vm2 are horizontal and vertical widths of the shield and opening portions formed on the mask pattern 7, Lh22 the optical distance between the mask on the mask pattern 7 and the vertical lenticular lens 21, Lh21 the distance between the vertical lenticular lens 21 and the image of the mask pattern, Lv22 the optical distance between the mask on the mask pattern 7 and the lateral lenticular lens 22, Lv21 the distance between the lateral lenticular lens 22 and the image of the mask pattern, and Hm and Vm the horizontal and vertical widths, respectively, of the shield and opening portions of the image of the mask pattern. The vertical lenticular lens 21 has the pitch shifts.

The pitch shifting way is similar to that in Embodiment 1. In this example, Hw = Hm2/3 and M(Hw/Hb) is 3, where Hb is the width of the black matrix in the horizontal direction. The vertical lenticular lens 3 placed after the image 24 of the mask pattern has no pitch shift.

$$E:Hm = Lh0:Lh1 \tag{1}$$

$$2 \times Hm:HL = (Lh0 + Lh1):Lh0 \tag{2}$$

$$fh = Lh1 \tag{3}$$

$$Vd:Vm = Lv1:Lv2 \tag{4}$$

$$Vd:VL = (Lv1 + Lv2)/2:Lv2 \tag{5}$$

$$1/fv = 1/Lv1 + 1/Lv2 \tag{6}$$

$$Vm:Vm2 = Lv21:Lv22 \tag{7}$$

$$Vm:VL2 = (Lv21 + Lv22)/2:Lv22 \tag{8}$$

$$1/fv2 = 1/Lv21 + 1/Lv22 \tag{9}$$

$$Hm:Hm2 = Lh21:Lh22 \tag{10}$$

$$Hm:HL2 = (Lh21 + Lh22)/2:Lh22 \tag{11}$$

$$1/fh2 = 1/Lh21 + 1/Lh22 \tag{12}$$

The diffuser 24 is placed at the position of the mask pattern image formed from the mask pattern 7 by the imaging system 13, and scatters rays at random.

There are practical cases in which aberration of the vertical and lateral lenticular lenses 21, 22 of the imaging system 13 and diffusion of the diffuser 24 acts to eliminate the dark portions due to the black stripe of the mask pattern in the once-focused image, without provision of the pitch shifts of the vertical lenticular lens 21. In this case, the apparatus can be constructed by placing the rear cross lenticular lenses with respect to the mask pattern image once focused by the vertical lenticular lens 21 with no pitch shift and the lateral lenticular lens 22. This means that there is no necessity for the pitch shifts of the vertical lenticular lens 21.

According to the present invention, the checkered mask pattern formed in the self-emitting element or in the mask substrate is comprised of the black and white LCD, the mask pattern shape on the black and white LCD is varied so as to follow the observer's motion detected by the detector for detecting the position of the observer's head or eyes or the like, to effect the tracking the observation area, and the shift is given to the arrangement pitches of the cylindrical lenses of the vertical lenticular lens to improve or eliminate the portions without incidence of the image light on the observation plane due to the black matrix of the black and white LCD, whereby the present invention can accomplish the stereoscopic image display apparatus that facilitates the observation of good stereoscopic image.

Stereoscopic observation of image information displayed on a display is implemented by forming a mask pattern in which a plurality of opening portions consisting of an array of horizontal repetitions of transmitting portions and non-transmitting portions and a plurality of shield portions consisting of only non-transmitting portions are arranged at predetermined pitches in a horizontal direction and in a vertical direction, in a display surface of an optical modulator having a discrete pixel structure, radiating light from a light source to the optical modulator to form patterned light, guiding the patterned light through an optical system having lenticular lenses to illuminate a display displaying at least two parallax images, and guiding beams based on the at least two parallax images displayed on the display, to the right eye and to the left eye of an observer.

**Claims**

1. A stereoscopic image display apparatus constructed to form a mask pattern in which a plurality of opening portions, each consisting of an array of horizontal repetitions of transmitting portions and non-transmitting portions, and a plurality of shield portions, each consisting of only non-transmitting portions, are arranged at predetermined pitches in a horizontal direction and in a vertical direction, in a display surface of an optical modulator having a discrete pixel structure, to radiate light from light source means to the optical modulator to form patterned light, to guide the patterned light through an optical system to illuminate a display displaying at least two parallax images, and to guide beams based on the at least two parallax images displayed on the display to the right eye and to the left eye of an observer, so as to permit stereoscopic observation of image information displayed on the display, wherein said optical system comprises a vertical lenticular lens consisting of a plurality of cylindrical lenses having a generator along the vertical direction and a lateral lenticular lens consisting of a plurality of cylindrical lenses having a generator along the horizontal direction and wherein said vertical lenticular lens is a lens array in which cylindrical units, each comprising a plurality of cylindrical lenses of different pitches, are arranged at constant pitches.

2. A stereoscopic image display apparatus constructed to form a mask pattern in which a plurality of opening portions, each consisting of an array of horizontal repetitions of transmitting portions and non-transmitting portions, and a plurality of shield portions, each consisting of only non-transmitting portions, are arranged at predetermined pitches in a horizontal direction and in a vertical direction, in a display surface of an optical modulator having a discrete pixel structure, to radiate light from light source means to the optical modulator to form patterned light, to focus the patterned light on a predetermined plane by an imaging optical system to form an image thereof, to guide patterned light from the image formed on the predetermined plane, through an optical system to illuminate a display displaying at least two parallax images, and to guide beams based on the at least two parallax images displayed on the display to the right eye and to the left eye of an observer, so as to permit stereoscopic observation of image information displayed on the display, wherein said imaging optical system comprises a vertical lenticular lens consisting of a plurality of cylindrical lenses having a generator along the vertical direction and a lateral lenticular lens consisting of a plurality of cylindrical lenses having a generator along the horizontal direction and wherein said vertical lenticular lens is a lens array in which cylindrical units, each comprising a plurality of cylindrical lenses of different pitches, are arranged at constant pitches.

3. A stereoscopic image display apparatus comprising illumination beam forming means for forming patterned illumination beams, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams with directivity and to converge beams illuminating each horizontal line into a predetermined area on an observation plane corresponding to a parallax image displayed on each horizontal line on the image display device, wherein said illumination beam forming means forms the patterned illumination beams by forming a predetermined emission pattern consisting of light-emitting portions and non-emitting portions on a self-emitting element comprising a lot of pixels and having ineffective portions between the pixels and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

4. A stereoscopic image display apparatus comprising illumination beam forming means for forming patterned illumination beams, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams with directivity and to converge beams illuminating each horizontal line into a predetermined area on an observation plane corresponding to a parallax image displayed on each horizontal line on the image display device, wherein said illumination beam forming means comprises a backlight light source and a transmissive display placed in front thereof, having a lot of pixels, and having ineffective portions between the pixels and forms the patterned illumination beams by forming a predetermined mask pattern consisting of transmitting and non-transmitting portions on the display and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

5. A stereoscopic image display apparatus comprising illumination beam forming means for forming patterned illumination beams, an imaging optical system for imaging the illumination beams patterned by said illumination beam forming means, on a predetermined plane, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams, imaged on the predetermined plane, with directivity and to converge beams illuminating each horizontal line into a predetermined area on an observation plane corresponding to a parallax image displayed on each horizontal line on the image display device, wherein said illumination beam forming means forms the patterned illumination beams by forming a predetermined emission pattern consisting of light-emitting portions and non-emitting portions on a self-emitting element comprising a lot of pixels and having ineffective portions between the pixels and wherein said imaging optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

6. A stereoscopic image display apparatus comprising illumination beam forming means for forming patterned illumination beams, an imaging optical system for imaging the illumination beams patterned by said illumination beam forming means, on a predetermined plane, a transmissive image display device for displaying a synthetic parallax image formed by dividing images corresponding to a plurality of view points into horizontal lines and arranging the horizontal lines in a predetermined order in a vertical direction, and a deflecting optical system set to provide the patterned illumination beams, imaged on the predetermined plane, with directivity and to converge beams illuminating each horizontal line into a predetermined area on an observation plane corresponding to a parallax image displayed on each horizontal line on the image display device, wherein said illumination beam forming means comprises a backlight light source and a transmissive display placed in front thereof, having a lot of pixels, and having ineffective portions between the pixels and forms the patterned illumination beams by forming a predetermined mask pattern consisting of transmitting and non-transmitting portions on the display and wherein said deflecting optical system has a predetermined periodic structure in a horizontal direction and a predetermined periodic structure in a vertical direction and said horizontal structure comprises a repetition structure of a predetermined pattern and said predetermined pattern comprises a plurality of components which are so arranged as to be shifted with respect to a basic period in the horizontal direction.

7. The stereoscopic image display apparatus according to Claim 3, wherein said predetermined emission pattern consisting of the light-emitting portions and non-emitting portions formed on said self-emitting element is a checkered pattern consisting of rectangular light-emitting portions and non-emitting portions each comprised of plurality of pixels arranged in the horizontal direction and the vertical direction, wherein, letting M be an integer closest to a ratio $H_w/H_b$ where $H_w$ represents a horizontal length of each pixel in the self-emitting element and $H_b$ represents a horizontal length of non-effective portion of each pixel in the self-emitting element, the number N of components constituting said predetermined pattern is equal to the integer M ($N=M$), wherein the i-th (i = 1,..., N) component is placed at a position shifted by $t_i$ from a position $HL \cdot i$ defined by the basic period HL, where $t_i$ (i = 1,..., N) is a value resulting from rearrangement of values of $H_b \cdot k$ ($k$ = -(M - 1)/2, -(M - 1)/2 + 1,..., (M - 1)/2) in a predetermined order when M is an odd number, but $t_i$ is a value resulting from rearrangement of values of $H_b \cdot k$ ($k$ = -M/2, -M/2 + 1,..., M/2 - 1) in a predetermined order when M is an even number, and wherein the entire shape of the horizontal structure of said deflecting optical system is such a shape that said pattern consisting of N components is repeated a predetermined number of times.

8. The stereoscopic image display apparatus according to Claim 5, wherein said predetermined emission pattern consisting of the light-emitting portions and non-emitting portions formed on said self-emitting element is a checkered pattern consisting of rectangular light-emitting portions and non-emitting portions each comprised of plurality of pixels arranged in the horizontal direction and the vertical direction, wherein, letting M be an integer closest to a ratio $H_w/H_b$ where $H_w$ represents a horizontal length of each pixel in the self-emitting element and $H_b$ represents a horizontal length of non-effective portion of each pixel in the self-emitting element, the number N of components constituting said predetermined pattern is equal to the integer M ($N=M$), wherein the i-th (i = 1,..., N) component is placed at a position shifted by $t_i$ from a position $HL \cdot i$ defined by the basic period HL, where $t_i$ (i = 1,..., N) is a value resulting from rearrangement of values of $H_b \cdot k$ ($k$ = -(M - 1)/2, -(M - 1)/2 + 1,..., (M - 1)/2) in a predetermined order when M is an odd number, but $t_i$ is a value resulting from rearrangement of values of $H_b \cdot k$ ($k$ = -M/2, -M/2 + 1,..., M/2 - 1) in a predetermined order when M is an even number, and wherein the entire shape of the horizontal structure of said imaging optical system is such a shape that said pattern consisting of N components is repeated a predetermined number of times.

9. The stereoscopic image display apparatus according to Claim 4, wherein said predetermined mask pattern consisting of the transmitting and non-transmitting portions formed on said transmissive optical modulator is a checkered pattern comprising rectangular transmitting portions and non-transmitting portions each comprised of plurality of pixels arranged in the horizontal direction and the vertical direction, wherein, letting M be an integer closest to a ratio $H_w/H_b$ where $H_w$ represents a horizontal length of each pixel in the transmissive optical modulator and $H_b$ represents a horizontal length of non-effective portion of each pixel in the transmissive optical modulator, the number N of components constituting said predetermined patternn is equal to the integer M ($N=M$), wherein the i-th (i = 1,..., N) component is placed at a position shifted by $t_i$ from a position $HL \cdot i$ defined by the basic period HL, where $t_i$ (i = 1,..., N) is a value resulting from rearrangement of values of $H_b \cdot k$ ($k$ = -(M - 1)/2, -(M - 1)/2 + 1,..., (M - 1)/2) in a predetermined order when M is an odd number, but $t_i$ is a value resulting from rearrangement of values of $H_b \cdot k$ ($k$ = -M/2, -M/2 + 1,..., M/2 - 1) in a predetermined order when M is an even number, and wherein the entire shape of the horizontal structure of said deflecting optical system is such a shape that said pattern consisting of N components is repeated a predetermined number of times.

10. The stereoscopic image display apparatus according to Claim 6, wherein said predetermined mask pattern consisting of the transmitting and non-transmitting portions formed on said transmissive optical modulator is a checkered pattern comprising rectangular transmitting portions and non-transmitting portions each comprised of plurality of pixels arranged in the horizontal direction and the vertical direction, wherein, letting M be an integer closest to a ratio Hw/Hb where Hw represents a horizontal length of each pixel in the transmissive optical modulator and Hb represents a horizontal length of non-effective portion of each pixel in the transmissive optical modulator, the number N of components constituting said predetermined pattern is equal to the integer M ($N=M$), wherein the i-th ($i = 1,..., N$) component is placed at a position shifted by $t_i$ from a position $HL \cdot i$ defined by the basic period HL, where $t_i$ ($i = 1,..., N$) is a value resulting from rearrangement of values of $Hb \cdot k$ ($k = -(M - 1)/2, -(M - 1)/2 + 1,..., (M - 1)/2$) in a predetermined order when M is an odd number, but $t_i$ is a value resulting from rearrangement of values of $Hb \cdot k$ ($k = -M/2, -M/2 + 1,..., M/2 - 1$) in a predetermined order when M is an even number, and wherein the entire shape of the horizontal structure of said deflecting optical system is such a shape that said pattern consisting of N components is repeated a predetermined number of times.

11. The stereoscopic image display apparatus according to either one of Claims 3, 4, 6, 7, 9 and 10, wherein said deflecting optical system comprises a vertical lenticular lens consisting of a horizontally arranged array of many vertical cylindrical lenses having a generator along the vertical direction and a lateral lenticular lens consisting of a vertically arranged array of many lateral cylindrical lenses having a generator along the horizontal direction, and wherein said vertical lenticular lens is constructed in such structure that with respect to a predetermined basic period HL and a predetermined integer N, each of the first to Nth vertical cylindrical lenses is placed at a horizontal position shifted by a predetermined value from a position defined by the basic period HL and that the whole shape is comprised of a predetermined repetition number of shape patterns comprised of the N vertical cylindrical lenses.

12. A stereoscopic display apparatus comprising a light-emitting element or an optical modulator element having ineffective portions between pixels, a display for displaying a synthetic parallax image, and a periodic optical system disposed between the display and said element, for transmitting beams to the left and right eyes, wherein influence of said ineffective portions is reduced on an observation plane by disturbing periodicity of said periodic optical system.

13. A stereoscopic display method in a stereoscopic display apparatus comprising a light-emitting element or an optical modulator element having ineffective portions between pixels, a display for displaying a synthetic parallax image, and a periodic optical system disposed between the display and said element, for transmitting beams to the left and right eyes, wherein influence of said ineffective portions is reduced on an observation plane by disturbing periodicity of said periodic optical system.

14. The stereoscopic image display apparatus according to Claims 5 or 8, wherein said imaging optical system comprises a vertical lenticular lens consisting of a horizontally arranged array of many vertical cylindrical lenses having a generator along the vertical direction and a lateral lenticular lens consisting of a vertically arranged array of many lateral cylindrical lenses having a generator along the horizontal direction, and wherein said vertical lenticular lens is constructed in such structure that with respect to a predetermined basic period HL and a predetermined integer N, each of the first to Nth vertical cylindrical lenses is placed at a horizontal position shifted by a predetermined value from a position defined by the basic period HL and that the whole shape is comprised of a predetermined repetition number of shape patterns comprised of the N vertical cylindrical lenses.

FIG. 1

# FIG. 2

# FIG. 3

# FIG. 4

41

$(Hw-Hb) \cdot \dfrac{Lh0}{Lh1}$          $Hb \cdot \dfrac{Lh0}{Lh1}$

# FIG. 5

(A)

(B)

$|t1| \cdot \dfrac{Lh0}{Lh1}$

(C)

$|t2| \cdot \dfrac{Lh0}{Lh1}$

(D)

EP 1 083 756 A2

EP 1 083 756 A2

## FIG. 6

(A)                                                                              0

(B)                                                                              0

(C)                                                                              0

(D)                                                                              0

FIG. 7

*FIG. 8*

FIG. 9

FIG. 10

EP 1 083 756 A2

# FIG. 11

# FIG. 12

# FIG. 13